# EUROPÄISCHE PATENTSCHRIFT

(11) **EP 1 920 729 B1**
(45) Veröffentlichungstag und Bekanntmachung des Hinweises auf die Patenterteilung: **09.12.2009**
(21) Anmeldenummer: 06123857.2
(22) Anmeldetag: 10.11.2006
(51) Int. Cl.: A61C 8/00

(54) **Angussabutment für ein Dentalimplantat**
Cast abutment for a dental implant
Butée de moulage pour un implant dentaire

(43) Veröffentlichungstag der Anmeldung: 14.05.2008
(73) Patentinhaber: Straumann Holding AG, 4002 Basel (CH)
(72) Erfinder: Schlüssel, Marcel, 8303 Basserdorf (CH); Kast, Holger, 79341 Kenzingen (DE); Schwieder Fabian, 4056 Basel (CH)
(74) Vertreter: Modiano, Micaela Nadia

(56) Entgegenhaltungen:
- WO-A-99/17676
- WO-A-03/037207
- DE-A1- 19 742 381
- US-A- 5 662 473

## Beschreibung

Die vorliegende Erfindung stellt allgemein ein Angussabutment für ein Dentalimplantat, bevorzugt aus Gold hergestellt, mit einer verbesserten Verbindung zu einer Modellierhilfe bereit.

### Stand der Technik

In der implantologischen Zahnmedizin sind Abutments vielfältig bekannt geworden. Diese werden mit dem Dentalimplantat verbunden, das vorher im Kieferknochen eines Patienten implantiert wurde. Dies geschieht normalerweise mit einer Schraubverbindung, wobei zur Verbindung des Abutments mit dem Dentalimplantat Anzugsmomente im Bereich von 35 Ncm benutzt werden.

Bei der Herstellung einer Prothetik werden häufig Unterstützungen verwendet, die das dreidimensionale Modellieren einer passgenauen Zahnprothese vereinfachen. Dabei gibt es die Möglichkeit des direkten Angusses an ein vorgeformtes Angussabutment, das meistens aus einer Goldlegierung besteht. Dieses Angussabutment wird mittels einer Schraube am Implantat bzw. am Implantatanalog fixiert. Um beim späteren Anguss einen sauberen Schraubenkanal zu erzielen, wird auf das Angussabutment eine Unterstützung, im weiteren Modellierhilfe genannt, aus ausbrennbarem Kunststoff aufgesteckt. Diese kann bei Bedarf modifiziert werden.

Zur Zahnmodellerstellung wird die gewünschte Form des individuellen Sekundärteiles im Bereich vom Kragen des Angussabutments und der Modellierhilfe mit einem Wachs ausgeformt und danach eine Gussform, nach einschlägig bekannten Methoden, um das Wachsmodell erstellt. Darauffolgend werden die Modellierhilfe und das Wachs durch Ausbrennen entfernt, um die zu erstellende Struktur oder das Zahnmodell als Hohlform freizulegen. Eine bekannte Methode zur Erstellung dieser Formen ist das Wachsausschmelzverfahren (lostwax casting), bei der eine Form erstellt wird und das Wachs während des Gießvorgangs ausgeschmolzen wird und die Modellierhilfe rücltstandslos verbrannt wird. Als weiterer Schritt wird eine Edelmetalllegierung in diese Gussform durch einen Gusskanal eingegossen, worauf das hochfltissige Metall in die Form fließt und sich an die Oberfläche des Angussabutments anfügt. Gleichzeitig wird in der von dem ausgeschmolzenen Wachs erstellten Hohlform das Abbild des Wachsmodells ausgefüllt.

Es hat sich in der Praxis gezeigt, dass beim Anziehen der Okklusalschraube zur Fixierung des Angussabutment auf dem zahntechnischen Modell Spannungen auftreten können, die z. B. zu einer Verschiebung der Modellierhilfe in vertikaler Richtung führen können. Dadurch kann es zur Bildung eines Zwischenraums zwischen dem Angussabutment und der Modellierhilfe kommen, der beim Fertigen des Gussmodelles mit der Einbettmasse gefüllt wird, die die Modellierhilfe und das Angussabutment umgibt. Beim Anguss wird dieser Bereich dann nicht mit Metall gefüllt und bleibt mit der Einbettmasse besetzt, so dass das fertige Gussteil einen Zwischenraum bzw. einen Fehler im Anguss aufweist.

Ein Angussabutment gemäß dem Oberbegriff des Anspruchs 1 mit einer Modellierhilfe, die mit einer Okklusalschraube fixiert wird ist aus der US-A-5 662 473 bekannt.

Aus der ZA 2005 01370 ist ein Abutment für Zahnimplantate bekannt, wobei ein (Edel-)Metallzylinder an einem Dentalimplantat angeordnet ist, an dem eine Kunststoffhülse zur Erstellung eines Sockels okklusal befestigt ist. Die Hülse besitzt an der dem Metallzylinder zugewandten Seite ein Innengewinde, das mit einem entsprechenden Außengewinde am Abutment im Eingriff steht, um das Gießen eines Metallpfostens in den Metallzylinder des Abutments und um den Metallzylinder herum zu ermöglichen und diesen am Abutment zu fixieren. Die mittels Gewinde realisierte Verbindung muss, um einen einwandfreien Gießvorgang durchzuführen, in sehr feine Toleranzen dimensioniert werden, um einen hochdichten Abschluss zu gewährleisten. In der Praxis können die feinen Toleranzen mit Feingewinden realisiert werden, die jedoch kostenintensiv und sehr empfindlich in der Handhabung sind.

### Zusammenfassung der Erfindung

Daher ist es eine Aufgabe der vorliegenden Erfindung ein Angussabutment für ein Dentalimplantat bereitzustellen, das die obigen Probleme vermeidet.

Im Rahmen dieser Aufgabe besteht eine besondere Aufgabe der vorliegenden Erfindung darin, ein Angussabutment für ein Dentalimplantat zu realisieren, das eine verbesserte Verbindung zu einer Modellierhilfe bereitstellt.

Darüberhinaus besteht eine besondere Aufgabe der vorliegenden Erfindung in der Bereitstellung eines Angussabutments für ein Dentalimplantat, das kostengünstiger und mit erheblich weniger Aufwand herstellbar ist.

Des Weiteren ist es eine Aufgabe der vorliegenden Erfindung die Montage des Angussabutments zur Herstellung eines Zahnmodells, unter Zuhilfenahme eines Modellierträgers, zu vereinfachen.

Außerdem ist es eine Aufgabe der vorliegenden Erfindung die Struktur des Angussabutments während der Modellherstellung einer möglichst geringen Kräfteeinwirkung auszusetzen bzw. die Kräfteeinwirkung während der Verarbeitung oder der Anmodellierung bestmöglich zu übertragen, so dass sich eine verwendete Modellierhilfe nicht vom Angussabutment verschiebt.

Die obigen Aufgaben und weitere der nachfolgenden Beschreibung zu entnehmenden Aufgaben werden durch ein Angussabutment gemäß den anliegenden Ansprüchen gelöst.

### Kurzbeschreibung der Figuren

Weitere Merkmale und Vorteile der vorliegenden Erfindung sowie die Wirkungsweise der exemplarischen Ausführungsform der vorliegenden Erfindung werden unten mit Bezug auf die begleitenden Zeichnungen beschrieben. Die begleitenden Zeichnungen veranschaulichen die vorliegende Erfindung und dienen zusammen mit der Beschreibung weiterhin dazu, die Grundsätze der Erfindung zu erklären und es einem Fachmann auf dem betreffenden Gebiet zu ermöglichen, die Erfindung herzustellen und zu verwenden. Dabei zeigen:
Fig. 1A eine Seiten-, oder approximale Ansicht eines Angussabutments gemäß einer Ausführungsform der Erfindung;
Fig. 1B eine approximale Ansicht eines Angussabutments gemäß Fig. 1A;
Fig. 1C eine Aufsicht des Angussabutments gemäß Fig. 1A;
Fig. 2A eine approximale Ansicht einer Modellierhilfe Fig. 1A;
Fig. 2B eine Ansicht von schräg unten der Modellierhilfe der Fig. 2A;
Fig. 2C eine Aufsicht der Modellierhilfe der Fig. 2A;
Fig. 3 eine Seiten-, oder approximale Ansicht des erfindungsgemäßen Angussabutments mit aufgepresster Modellierhilfe.

### Beschreibung der bevorzugten Ausführungsformen der Erfindung

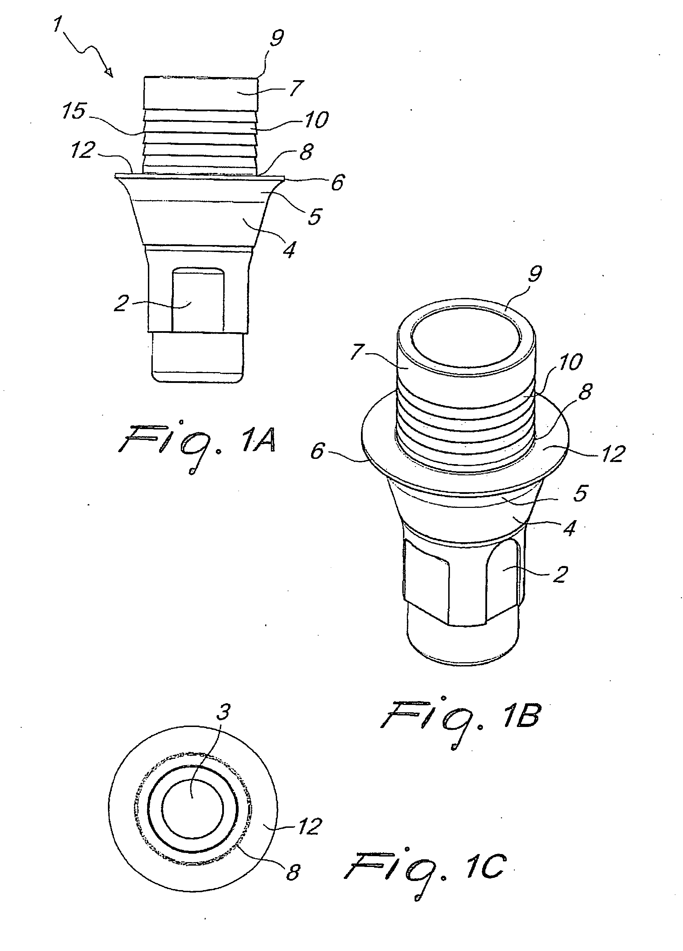

Unter Bezugnahme auf die Figuren 1A bis 1C wird eine derzeit bevorzugte Ausführungsform des Angussabutments für ein Dentalimplantat gemäß der vorliegenden Erfindung beschrieben. Das mit dem Bezugszeichen 1 allgemein gekennzeichnete Angussabutment verfügt über einen Sockelteil 2, der zur Aufnahme in ein Dentalimplantat (nicht dargestellt) ausgebildet ist. Es ist einem Fachmann auf diesem Gebiet bekannt, dass das Sockelteil 2 profilierte Bereiche aufweist, um eine passgenaue Verbindung bzw. eine Rotationssicherung des Angussabutments 1 zum Implantat zu gewährleisten. Des Weiteren ist das Angussabutment 1, wie im Fachgebiet einschlägig bekannt, mit einer durchgehenden Bohrung 3 ausgestattet, die zur Aufnahme einer (ebenfalls nicht dargestellten) Okklusalschraube zur Sicherung des Angussabutments 1 an das im Kieferknochen fixierte Dentalimplantat ausgebildet ist. Die Schraube kann während der Modellierung des Zahnmodells weiterhin dazu dienen, das Modell zur Bearbeitung auf einem Modellierträger (nicht gezeigt) zu fixieren. Im letzteren Fall wird die Schraube dabei durch die zylindrische Bohrung 16 in der Modellierhilfe 11 hindurchgeführt und mit dem Modellierträger verschraubt.

An das Sockelteil 2 des Angussabutments 1 schließt ein rundsymmetrischer Übergangsteil 4 an, der vorzugsweise als Kegelstumpf ausgebildet ist. Das Übergangsteil 4 geht in einen Bereich 5 über, der in der in Fig.1A dargestellten Ansicht einen ebenen Rand 6 aufweist.

An den mit Referenznummer 5 benannten Bereich schließt ein rundsymmetrisch ausgebildeter okklusaler Teil 7 des Angussabutments 1 an, wobei zwischen dem ebenen Rand 6 des Bereichs 5 und dem unteren Rand 8 des rundsymmetrischen okklusalen Teils 7, wie in Figur 1B klar erkennbar ist, eine ebene, gleichmäßig breite Kragenfläche 12 vorhanden ist. Der Bereich des okklusalen Teils 7, der an den unteren Rand 8 anschließt, besitzt auf seiner zylindrischen Außenfläche mehrfache, streifenformige oder ringförmige Einkerbungen oder zackenartige Ausformungen 10, die sich über einen Bereich von vorzugsweise etwa 75% der Zylinderfläche des okklusalen Teils 7 erstrecken. Im direkten Anschluss daran, bis zum oberen Rand 9, ist die Oberfläche des okklusalen Teils 7 glatt und lässt ein unkompliziertes Aufsetzen der Modellierhilfe 11 zu. Mit Hilfe der Einkerbungen 10, die in einem Winkel von vorzugsweise etwa 80° zur Horizontalachse nach unten geneigt sind und die an Ihren Enden eine Spitze 15 bilden, die der ebenen Kragenfläche 12 zugewandt sind, ist es möglich, eine Modellierhilfe 11 kraftschlüssig und dicht aufzupressen. Die nach unten geneigten Spitzen 15 der Einkerbungen 10 verhindern dabei bei der Herstellung des Zahnmodells ein Verrutschen oder Ablösen der Modellierhilfe 11.

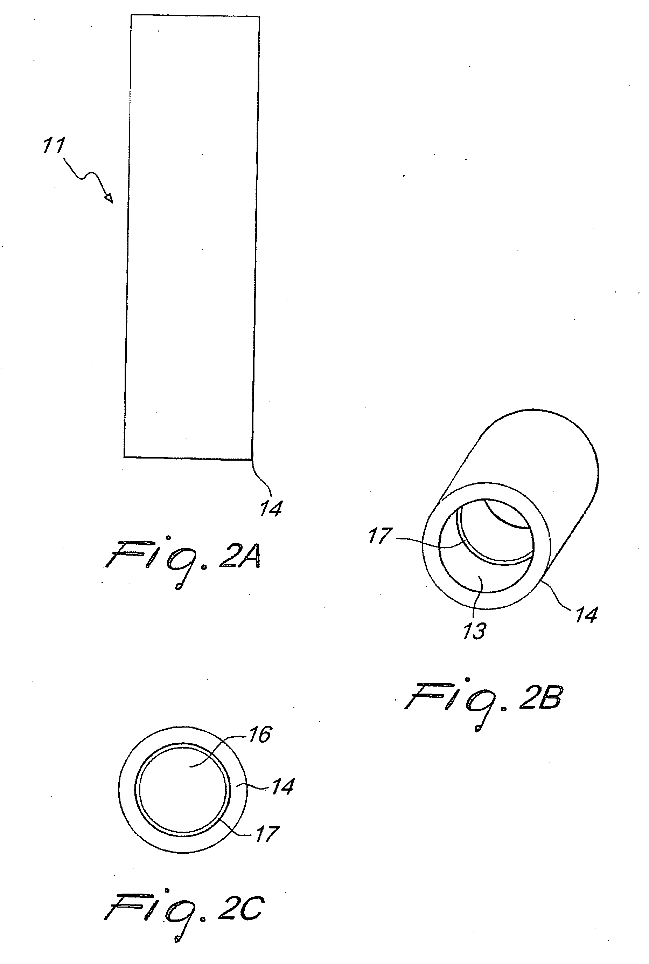

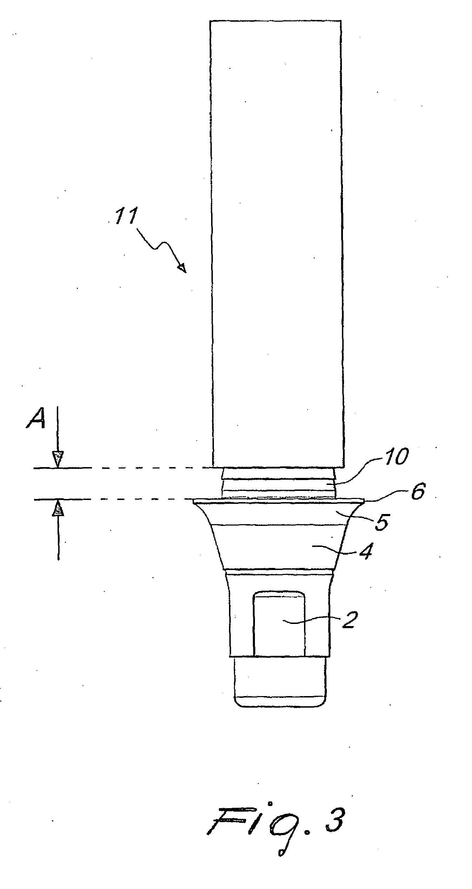

Figur 2A zeigt die zylinderförmige Modellierhilfe 11, die aus verbrennbarem Kunststoff besteht und vorteilhaft in Verbindung mit dem erfindungsgemäßen Angussabutment einsetzbar ist. Die Modellierhilfe 11 weist eine durchgehende, glatte Bohrung 16 auf, siehe Figur 2C, die einen Kanal zur Hindurchführung der Schraube (nicht dargestellt) bildet, die, nachdem das Zahnmodell fertig gestellt ist, mit dem im Kieferknochen fixierten Zahnimplantat des Patienten fixiert wird. Im Bereich der Bohrung 16, die zum Aufstecken an das Angussabutment dient, befindet sich ein Anschlag 17, der, wie in der Figur 2B dargestellt, die Strecke, auf die eine Modellierhilfe 11 auf das zylindrische, okklusale Teil 7 aufgepresst werden kann, begrenzt, wenn der Anschlag 17 mit dem oberen Rand 9 des Angussabutments in Kontakt gebracht wird. Somit steht vorteilhaft nur ein begrenzter Bereich 13 der Bohrung 16 der Modellierhilfe 11 für die kraftschlüssige Verbindung mit den Einkerbungen 10 zur Verfügung wie nachstehend unter Bezugnahme auf Figur 3 erläutert wird.

Wie vorstehend erläutert, ist das okklusale Teil 7 des Angussabutments zylinderförmig und mit den Einkerbungen 10 ausgebildet, und daher kann eine Modellierhilfe 11 erfindungsgemäß ohne weiteres Hilfsmittel aufgepresst werden. Die Herstellung von Angussabutment und Modellierhilfe und Vorfertigung in größeren Stückzahlen kann somit ermöglicht werden.

Erfindungsgemäß führen Spannungen während der Modellierung und Herstellung des Zahnes, die auf das Angussabutment und die Modellierhilfe ausgeübt werden, nicht zu einer Verschiebung bzw. einem Verrutschen der Modellierhilfe.

Des weiteren entsteht erfindungsgemäß eine gleichmäßige und formschlüssige Verbindung zwischen der Kragenfläche 12 des Angussabutments und vermindert daher nach dem Gießvorgang, eine umständliche und zeitaufwendige Nachbearbeitung des Modells, die sogar zur Zerstörung des Modells führen kann.

Figur 3 ist eine Darstellung eines Angussabutments mit aufgepresster Modellierhilfe, wie es bei der Herstellung eines Zahnmodells auf einem (nicht dargestellten) Modellierträger benutzt wird. Beim Aufpressen der Modellierhilfe wird die Strecke, die das okklusale Teil 7 des Angussabutments umschließt, von dem in Figur 2B dargestellten Anschlag 17 begrenzt und lässt somit einen Spalt A zwischen der unteren Kante 14 der Modellierhilfe und der Kragenfläche 12 des Angussabutments entstehen. Durch diesen Spalt ist eine gute Haftung des Modellierwachses gewährleistet.

Insbesondere wurde im Zusammenhang mit dem Spalt A in Versuchen festgestellt, dass die Auslassung des Bereichs zwischen der Kragenfläche 12 des Angussabutments und der unteren Kante 14 der aufgespannten Modellierhilfe 11, wie in Figur 3 dargestellt, eine Verbesserung der Qualität und Anfügung eines in einem Angussverfahren aufgebrachten Edelmetalls, bevorzugt Gold oder andere hochedle Legierungen, erreicht werden kann. Dies ist darauf zurückzuführen, dass im Laufe des Angussverfahrens das im Bereich des Spalts A direkt am Angussabutment anliegende Wachs früher als der Kunststoff der Modellierhilfe 11 ausgebrannt wird, so dass der Spalt A einen Raum, in dem sich der zum Aufquellen neigende erwärmte Kunststoff ausbreiten kann, bereitstellt. Somit werden Spannungen oder Risse in der Einbettmasse bzw. der Gussform und somit Fehler im fertigen Edelmetall-Anguss minimiert. Darüberhinaus kann bereits am Anfang des Angussverfahrens das Edelmetall am Angussabutment bzw. Angussabutmentkragen eindringen und den Kontakt mit diesen herstellen. Die vorstehende Gestaltung der Modellierhilfe bietet somit besondere Vorteile im Laufe des Angussverfahrens eines Edelmetalls.

Weiterhin vorteilhaft ist, dass die Gesamtdicke des modellierten Wachses im Bereich des Spalts A wegen der fehlenden Modellierhilfe 11 geringer ausfallen kann, da in diesem Bereich nur das Wachs vorhanden ist. Somit kann der Edelmetall-Anguss im Bereich des Spalts A schlanker gestaltet werden, was für die spätere Gestaltung des Zahnersatzes mehr Raum bietet.

Obwohl die Erfindung in Verbindung mit einem einteiligen Angussabutment beschrieben wurde, ist für den einschlägig versierten Fachmann ohne weiteres verständlich, dass sie analog auf zweiteilige Angussabutments übertragbar ist, wobei selbstverständlich dieselben Vorteile wie im Zusammenhang mit einem einteiligen Angussabutment beschrieben, erzielt werden.

Wenn in irgendeinem der Ansprüche erwähnte technische Merkmale mit einem Bezugszeichen versehen sind, wurden diese Bezugszeichen lediglich eingeschlossen, um die Verständlichkeit der Ansprüche zu erhöhen. Entsprechend haben diese Bezugszeichen keine einschränkende Auswirkung auf den Schutzumfang eines jeden Elements, das exemplarisch durch solche Bezugszeichen bezeichnet wird.

## Patentansprüche

1. Angussabutment (1) für ein Dentalimplantat, das folgendes umfasst:
ein Übergangsteil (4); und
ein an das Übergangsteil (4) koronal anschließendes okklusales Teil (7) mit einem apikal liegenden unteren Rand (8), **dadurch gekennzeichnet, dass**
das Angussabutment (1) weiterhin ein apikales Sockelteil (2) umfasst, an dem das koronale Übergangsteil (4) anschließt, und dadurch dass
das okklusale Teil (7) vom unteren Rand (8) aus an seiner Umfangsfläche einen Bereich mit Einkerbungen (10) hat, deren Spitzen (15) in Richtung des Übergangsteils (4) zugewandt sind.

2. Angussabutment nach Anspruch 1, wobei das okklusale Teil (7) rundsymmetrisch ausgebildet und/oder wobei das Übergangsteil (4) rundsymmetrisch ausgebildet ist.

3. Angussabutment nach Anspruch 1 oder 2, wobei der mit Einkerbungen (10) versehene Bereich etwa 75% der Umfangsfläche des okklusalen Teils (7) in Anspruch einnimmt und worin der verbleibende Bereich der Umfangsfläche des okklusalen Teils (7) im Wesentlichen glatt ist.

4. Angussabutment nach einem oder mehreren der vorangehenden Ansprüche, wobei die Einkerbungen (10) in einem Winkel von etwa 80° zur Horizontalachse des okklusalen Teils (7) nach unten geneigt sind.

5. Angussabutment nach einem oder mehreren der vorangehenden Ansprüche, wobei die Einkerbungen (10) derart bemessen sind, um eine kraftschlüssige Verbindung mit einer Modellierhilfe (11) zu erzeugen.

6. Angussabutment nach einem oder mehreren der vorangehenden Ansprüche, wobei die Einkerbungen (10) streifenförmig oder ringförmig ausgebildet sind und/oder wobei die Einkerbungen (10) zackenartig ausgebildet sind.

7. Kombination aus einer Modellierhilfe (11) und dem Angussabutment nach einem oder mehreren der Ansprüche 1 bis 6, wobei die Modellierhilfe (11) eine durchgehende Bohrung (16) aufweist, und wobei die Bohrung (16) der Modellierhilfe (11) und/oder die Einkerbungen (10) am Angussabutment so bemessen sind, um dazwischen eine kraftschlüssige Verbindung zu erzeugen.

8. Kombination gemäß Anspruch 7, wobei die Bohrung (16) der Modellierhilfe einen Anschlag (17) aufweist, der die Strecke begrenzt, auf die eine Modellierhilfe (11) auf das okklusale Teil (7) aufgepresst werden kann.

9. Kombination gemäß Anspruch 7 oder 8, wobei die Modellierhilfe (11) und ihre Bohrung (16) im Wesentlichen zylindrisch ausgebildet sind.

## Claims

1. A cast abutment (1) for a dental implant, comprising:
a transition piece (4) and
an occlusal piece (7) bordering coronally on the transition piece (4), having an apical lower rim (8), **characterized in that**
the cast abutment (1) further comprises an apical socket piece (2) bordering on the coronal transition piece (4), and **in that**
the occlusal piece (7) has, starting from its lower rim (8), a portion with incisions (10) on its circumferential area, the edges (15) thereof facing the transition piece (4).

2. The cast abutment according to Claim 1, wherein the occlusal piece (7) is formed circular symmetric and/or wherein the transition piece (4) is formed circular symmetric.

3. The cast abutment according to Claim 1 or 2, wherein the portion provided with incisions (10) covers approximately 75% of the circumferential area of the occlusal piece (7) in Claim 1, and wherein the remaining portion of the circumferential area of the occlusal piece (7) is substantially smooth.

4. The cast abutment according to one or more of the preceding claims, wherein the incisions (10) are inclined downward at an angle of approximately 80° to the horizontal axis of the occlusal piece (7).

5. The cast abutment according to one or more of the preceding claims, wherein the incisions (10) are dimensioned such as to result in a force-fit joint with a modeling aid (11).

6. The cast abutment according to one or more of the preceding claims, wherein the incisions (10) are embodied in the form of stripes or rings and/or wherein the incisions (10) are embodied in the form of tines.

7. A combination of a modeling aid (11) and the cast abutment according to one or more of Claims 1 through 6, the modeling aid (11) having a through hole (16), and wherein the hole (16) of the modeling aid (11) and/or the incisions (10) in the cast abutment are dimensioned so as to result in a force-fit joint therebetween.

8. The combination according to Claim 7, wherein the hole (16) of the modeling aid has an end stop (17) limiting the distance up to which a modeling aid (11) can be pressed onto the occlusal piece (7).

9. The combination according to Claim 7 or 8, wherein the modeling aid (11) and its hole (16) are formed substantially cylindrically.

## Revendications

1. Pilier de coulée (1) pour un implant dentaire, comportant les éléments suivants :
une partie de transition (4), et
une partie occlusale (7) coronalement contiguë à la partie de transition (4), ayant un bord inférieur apical (8), **caractérisé en ce que**
le pilier de coulée (1) comporte en outre une partie d'alvéole apicale (2) contiguë à la partie de transition coronale (4), et **en ce que**
la partie occlusale (7) a sur sa surface périphérique, à partir du bord inférieur (8), une zone munie d'indentations (10) dont les sommets (15) sont dirigés vers la partie de transition (4).

2. Pilier de coulée selon la revendication 1, dans lequel la partie occlusale (7) est configurée de manière circulairement symétrique et/ou dans laquelle la partie de transition (4) est configurée de manière circulairement symétrique.

3. Pilier de coulée selon la revendication 1 ou 2, dans lequel la zone munie d'indentations (10) occupe environ 75 % de la surface périphérique de la partie occlusale (7) et dans lequel la zone restante de la surface périphérique de la partie occlusale (7) est sensiblement lisse.

4. Pilier de coulée selon une ou plusieurs des revendications précédentes, dans lequel les indentations (10) sont inclinées vers le bas à un angle d'environ 80 par rapport à l'axe horizontal de la partie occlusale (7).

5. Pilier de coulée selon une ou plusieurs des revendications précédentes, dans lequel les indentations (10) sont dimensionnées de manière à produire un assemblage à force avec une aide au modelage (11).

6. Pilier de coulée selon une ou plusieurs des revendications précédentes, dans lequel les indentations (10) sont configurées en forme de bandes ou d'anneaux et/ou dans lequel les indentations (10) sont configurées de manière dentelée.

7. Combinaison d'une aide au modelage (11) et d'un pilier de coulée selon une ou plusieurs des revendications 1 à 6, dans laquelle l'aide au modelage (11) comporte un trou traversant (16), et dans laquelle le trou (16) de l'aide au modelage (11) et/ou les indentations (10) sont dimensionnés sur le pilier de coulée de manière à produire un assemblage à force entre ceux-ci.

8. Combinaison selon la revendication 7, dans laquelle le trou (16) de l'aide au modelage comporte une butée (17) qui limite la distance sur laquelle une aide au modelage (11) peut être emmanchée par pression sur la partie occlusale (7).

9. Combinaison selon la revendication 7 ou 8, dans laquelle l'aide au modelage (11) et son trou (16) sont configurés de manière sensiblement cylindrique.
